# EUROPEAN PATENT APPLICATION

(11) **EP 1 544 780 A1**
(43) Date of publication of application: **22.06.2005**
(21) Application number: 04746323.7
(22) Date of filing: 17.06.2004
(51) Int. Cl.: G06F 17/60, G06F 15/00, G06F 12/14

(54) **AUTHENTICATION SYSTEM**

(30) Priority: 11.07.2003 JP 2003273315
(71) Applicant: MATSUSHITA ELECTRIC INDUSTRIAL CO., LTD., Kadoma-shi, Osaka 571-8501 (JP)
(72) Inventor: WAKAMORI, Masahiro, (JP); MORITA, Kaoru, (JP)
(74) Representative: Grünecker, Kinkeldey, Stockmair & Schwanhäusser Anwaltssozietät
(86) International application number: PCT/JP2004/008854
(87) International publication number: WO 2005/006231

(57) **Abstract**

The authentication system is hard against fraudulent acts even if the authenticator or the system of retail store is forged, resulting in the system with a high security. The system includes: an authenticator having an authentication processor to authenticate whether the user is registered previously, and a data output part to send an identification data of the user when the user is authenticated to be registered previously; and a server having a data input part to input data of the user, a credit appraiser to appraise the user according to the identification data, and an appraisal result output part to output the credit appraisal result.

## Description

### TECHNICAL FIELD

The present invention relates to an authenticator to authenticate an individual using image data and an authentication system using the authenticator.

### BACKGROUND ART

Recently, an authenticator using specific biological data of an individual (so called biometrics data) as an authentication data is realized for principal authentication, and an authentication system employing such authenticator capable of data communication for products purchasing through the network is also marketed.

For example, Japanese Patent Laid-Open Application No. 2003-6549 discloses a technology of transaction system capable of products purchasing composed of an authenticator adopting fingerprints as an authentication data and a register, deployed in a retail store, capable of communicating with the authenticator.

When a user wants to purchase products in the retail store using the technology, firstly the user performs an authentication job using the authenticator installed in his/her cell-phone to send a principal identification data to the register deployed in the retail store from his/her cell-phone. Then, register in the retail store sends identification data of the user to a server of a financial institution where the user has an account and sends an inquiry whether or not the user can pay for the products. When the server appraises his/her credit successfully (hereafter referred to credit appraisal), the transaction will be approved and the products expense is deducted from his/her account in the financial institution on each occasion or on a contracted settlement date.

However, various risks of fraudulent acts are possible on the side of retail store or authenticator in the above technology on transaction system. For example, in the conventional technology the authenticator sends an identification data of the user to the register. The register sends identification data of the user and the inquiry on his/her credit appraisal to the server of financial institution. When the server appraises the credit successfully, the products expense is transferred from his/her account in the financial institution to the account of retail store. Therefore, the problem is that storing the identification data of a certain user in the register of retail store previously, someone impersonating the user can send an inquiry of the identification data and credit appraisal from the register to the server pretending as if the user himself/herself purchases products, and that after it would be appraised successfully a value of products that is not really purchased is transferred into someone's account.

### SUMMARY OF THE INVENTION

Considering the aforementioned problems, the present invention aims at providing an authentication system with a high security so that nobody can do fraudulent acts for the system easily.

To solve the problem, it is an aspect of the present invention that the authentication system includes:
an authenticator having: an authentication processor to authenticate whether or not an authenticatee is a user previously registered; and a data output part to output the identification data when the authenticatee is authenticated as a user previously registered; and
a server having: a credit appraiser to appraise credit of authenticatee according to the identification data output from the data output part; and an appraisal result output part to output a result in credit appraiser.

The configuration can block fraudulent acts from the retail store side as identification data of an authenticatee is sent from an authenticator to a server for credit appraising only after authenticatee has been accepted, and therefore it is difficult for someone impersonating the user to steal the identification data of the authenticatee or to ask the identification data and credit appraisal even if using tampered devices such as for instance the register in retail store or POS system (hereafter referred to terminal), thereby resulting in an authentication system with a high security.

Additionally, the authenticator may have an image reader to input an image data, and the authentication processor may have a configuration to authenticate the authenticatee according to the image data input from the image reader.

The configuration can adopt various kinds of biometrics data of an authenticatee such as for instance fingerprints, iris, facial features, retina or the like resulting in a higher authentication rate.

Moreover, when an eye-image of an authenticatee is used as input image data, the authentication processor may include: an authentication data producer to produce an authentication data according to an iris pattern of the eye image of authenticatee; a storage to store a login authentication data; and a collator to collate the login authentication data with the authentication data produced according to the eye image.

The configuration can achieve a more accurate principal authentication with a lower false rejection rate and a false acceptance rate.

Next, it is also an aspect of the present invention that the authentication system is provided with a terminal having an appraisal result input part to input an appraisal result output from the server.

The configuration can block fraudulent acts from the retail store side as identification data of an authenticatee is sent from an authenticator to a server for credit appraising and sending the results to the terminal, only after authenticatee has been accepted, and therefore it is difficult for someone impersonating the user to steal the identification data of authenticatee or to ask the identification data and credit appraisal even if using tampered devices such as for instance the register in retail store, thereby enabling to provide an authentication system with a high security.

Additionally, the authenticator may have a data input part to input a data including a data on a product to be transacted, and the terminal may have a data output part to output a data including a data on the product to be transacted to the data input part of the authenticator.

The configuration can send information whether or not products can be purchased or information on products for transaction from the terminal to the authenticator, thus enabling for an authenticatee to know his/her credit appraisal results or information on products for transaction.

Next, it is still an aspect of the present invention that the authentication system has:
a server having: a storage to store a login authentication data of a user to be registered and an authentication processor to execute a predetermined authentication process; and a data output part to output the login authentication data and the authentication processor; and
an authenticator having: an authentication data input part to input an authentication data of an authenticatee; a data input part to input the login authentication data and the authentication processor; and a processor to perform a predetermined processing using the authentication data,
wherein the authenticator reads the authentication processor input from the server into the processor to collate the authentication data of the authenticatee with the login authentication data of the authenticatee using the authentication processor read into the processor.

The configuration can provide the authentication system with a high security as the authenticator starts authentication process after receiving the login authentication data and the authentication processor that have not been installed on the authenticator previously, and therefore it is difficult for someone to impersonate the authenticatee by tampering the login authentication data of the authenticatee. Additionally, the configuration can perform all the time the newest authentication processing by an updated version, if the authentication processor is a kind of software, as the authentication processor is sent to the authenticator from the server.

The authentication system may have a register having a login authentication data input part to input a login authentication data of the user to be registered and a login authentication data output part to output the login authentication data, wherein the server having a data input part to input the login authentication data and the authentication processor, the register outputs the login authentication data input into the login authentication input part from the data output part to the data input part of the server, and the server stores the login authentication data input into the data input part in the storage.

The configuration can provide the authentication system with a higher security because at the start of the authentication system, the authenticatee sends his/her authentication data input from the register to the server as his/her login authentication data, the authenticator performs the authentication processing with reference to the login authentication data sent from the server, therefore a more reliable login authentication data can be obtained if the register is deployed on a location with a high security for instance a financial institution or carrier company.

Moreover, the authentication system may have a configuration that the server has an encrypter to encrypt the authentication processor and the login authentication data by a predetermined encrypting method; stores a decrypter to decrypt encrypted the authentication processor and the login authentication data in the storage; and outputs the decrypter and the encrypted authentication processor and login authentication data; and
the authenticator decrypts the authentication processor and the login authentication data input into the data input part by the decrypter.

The configuration can provide the authentication system with a higher security because the authenticator communicates with the server using encrypted data stored in storage of the server, encrypted data that cannot be decrypted easily if stolen in communication pathways.

Next, it is still an aspect of the invention that the authentication system has:
a register having a login authentication data input part to input a login authentication data of an authenticatee and a login authentication data output part to output the login authentication data;
an authenticator having an authentication data input part, data I/O part to input/output a certain data, and a processor to perform a predetermined processing using the authentication data;
a server having a data input part to input an identification data of the authenticatee from the authenticator and to input the login authentication data from the register, a storage to store the login authentication data and an authentication processor to perform a predetermined authentication processing, a credit appraiser to appraise credit of the authenticatee using the identification data; and
a terminal having an appraisal result input part to input the appraisal results output from the server, wherein
the authenticator reads the authentication processor input from the server into the processor to collate the authentication data of the authenticatee with the login authentication data by the authentication processor, then outputs the identification data of the authenticatee to the server when the authenticatee is authenticated as a user registered previously;
the server appraises credit of the authenticatee in the credit appraiser to output a result of the appraisal to the terminal.

The configuration can provide an authentication system with a high security because an identification data of an authenticatee is sent from an authenticator to a server for credit appraising only after authenticatee has been accepted, and therefore it is difficult for someone impersonating the user to steal the identification data of authenticatee or to ask the identification data and credit appraisal even if using tampered devices such as for instance the register in retail store or POS terminal. Additionally, The configuration can provide the authentication system with a higher security because at start of the authentication system, the authenticatee sends his/her authentication data input from the register to the server as his/her login authentication data, the authenticator performs the authentication processing referring the login authentication data sent from the server, therefore a more reliable login authentication data can be obtained if the register is deployed on a highly secure location for instance a financial institution or a carrier company.

It is an aspect of the present invention that the authenticator has:
an image reader to input an image; an authentication data producer to produce an authentication data out of the image; a collator to collate the authentication data with another authentication data; a data input part to input a data including a login authentication data; and
a processor to perform a predetermined processing using the data input from the data input part and the image,
wherein the processor reads the authentication data producer and the collator from the data input part for the authentication data producer to produce the authentication data correspondent to the image, and the collator checks to compare the login authentication data with the authentication data correspondent to the image.

The configuration can realize an authentication system with a high security because the authenticator does not have any confidential data such as the login authentication data, authentication data producer or collator initially but starts authentication processing after the login authentication data and authentication processor are received, it is difficult for the authenticatee to impersonate an operator of the authenticator by tampering the login authentication data, with little risks of data leakage even if the authenticator is broken or stolen. Additionally, the configuration can perform all the time the newest authentication processing by an updated version, if the authentication processor is a kind of software, as the authentication processor is sent to the authenticator from the server.

The authentication system may have a configuration that with the login authentication data is encrypted; the data input part inputs a decrypter to decrypt the login authentication data; and the collator checks to compare the login authentication data decrypted by the decrypter with the authentication data correspondent to the image.

The configuration can provide the authentication system with a higher security because the authenticator communicates with other devices using encrypted data that cannot be decrypted easily if stolen in communication pathways.

The authentication system may have a configuration that with the image is an eye-image of the authenticatee, and the authentication data producer produces the authentication data according to an iris pattern of the eye-image of the authenticatee.

The configuration can achieve a more reliable principal authentication with a lower false rejection rate and false acceptance rate.

Additionally, the server of the present invention has:
a data input part to input data including an authentication data; an encrypter to encrypt the authentication data for a login authentication data; a storage to store the login authentication data; and a data output part to output data stored in the storage.

The configuration can provide the authentication system with a high security because the server communicates with other devices using encrypted data stored in a storage of the server.

Additionally, the storage of the server may store:
an authentication data producer to produce an authentication data using an image, a collator to collate the authentication data with another authentication data, and a decrypter to decrypt the login authentication data.

The configuration can perform an authentication processing in other information equipment that has no authentication processor by sending the authentication data producer, collator and decrypter stored in the storage.

It is also an aspect of the present invention that the register has: an image reader to input an image of a user to be registered; an authentication data producer to produce a certain authentication data using the image; an individual data input part to input an individual data of the user to be registered; and a data output part to output the authentication data and the individual data.

The configuration can provide the authentication system with a high level security because the register can output the authentication data and individual data obtained from the authenticatee, and that a more credible login authentication data can be obtained from the register deployed in a secure location such as for instance a financial institute or a carrier company.

The register of the present invention may have a configuration that with the image is an eye-image of the user to be registered, and the authentication data producer produces the authentication data according to an iris pattern of the eye-image of the user to be registered.

The configuration can register an authentication data capable of achieving a more accurate principal authentication with a lower false rejection rate and false acceptance rate as a login authentication data.

It is also an aspect of the present invention that the terminal has: an appraisal result input part to input a credit appraisal of a user to purchase a product; and a data output part to output a data including a data showing whether or not the product is accepted to be purchased based on a result of the credit appraisal.

The configuration can provide the authentication system with a high security and a less onerous usability because the terminal outputs whether or not a purchaser can purchase products or sends information on the price of products to the purchaser after receiving the results of credit appraisal from other devices such as a server or the like.

The terminal of the authentication system have a configuration that the data output part outputs the data including the data showing whether or not the product is accepted to be purchased using an infrared ray.

The configuration can contribute to the operating cost reduction of the authentication system because the register can send data for instance to the authenticator double as a telephone from a register instead of using telephone lines.

As mentioned above, the authentication system with authenticator, server or the like of the present invention can provide a configuration with a high security because no one can do fraudulent acts on the authentication system even if the authenticator or the system of retail store is tampered.

### BRIEF DESCRIPTION OF THE DRAWINGS

FIG. 1 shows schematically a block diagram of an authentication system used in the preferred embodiment of the present invention.
FIG. 2 shows a block diagram of an example of authenticator configuration used in the preferred embodiment of the present invention.
FIG. 3 shows an external view of an authenticator used in the preferred embodiment of the present invention.
FIG. 4 shows a block diagram of an example of server configuration used in the preferred embodiment of the present invention.
FIG. 5 shows a login authentication data table of the server used in the preferred embodiment of the present invention.
FIG. 6 shows a block diagram of an example of register configuration used in the preferred embodiment of the present invention.
FIG. 7 shows a block diagram of an example of terminal configuration used in the preferred embodiment of the present invention.
FIG.8 shows schematically an asking operation for the authentication system used in the preferred embodiment of the present invention.
FIG.9 shows schematically a transaction operation of products for the authentication system used in the preferred embodiment of the present invention.
FIG. 10 shows an example of application window used in the preferred embodiment of the present invention.
FIG. 11 shows examples of authentication start window and authentication finish window of the authentication process used in the preferred embodiment of the present invention.
FIG. 12 shows an example of permission window used in the preferred embodiment of the present invention.
FIG. 13 shows an example of products list window used in the preferred embodiment of the present invention.
FIG. 14 shows examples of transaction confirmation window and transaction finish window used in the preferred embodiment of the present invention.

### DETAILED DESCRIPTION OF THE PREFERRED EMBODIMENT

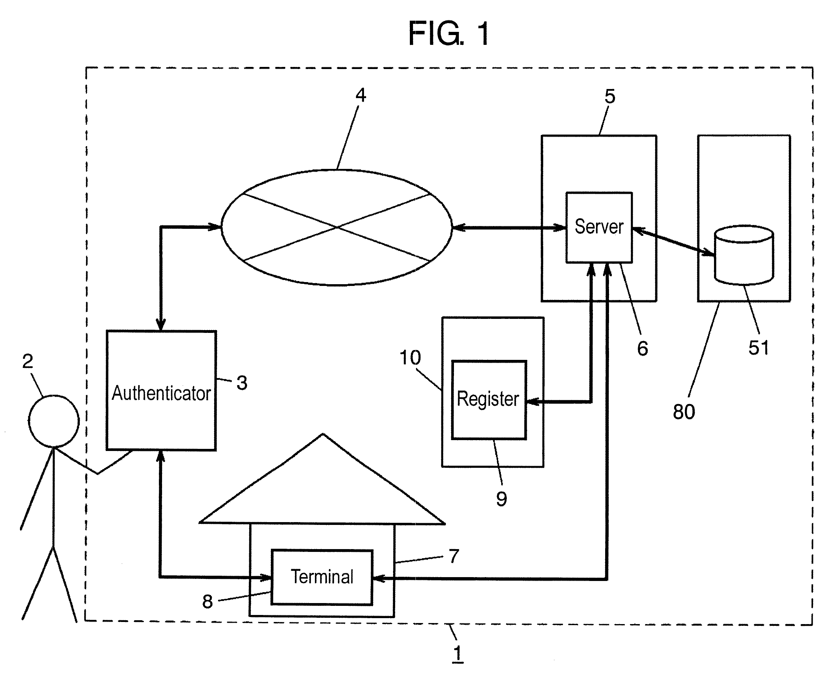

Now, an authenticator, server and an authentication system used in the preferred embodiment of the present invention are described with reference to drawings. Firstly, the authentication system configuration is described with reference to FIG. 1. FIG. 1 is a block diagram showing schematically authentication system 1 used in the preferred embodiment.

As shown in FIG. 1, authentication system 1 is a system that user 2 can transact to purchase products and the like sold in retail store 7 using authenticator 3 with telephone functions. Authenticator 3 exchanges data with terminal 8 in retail store 7 via server 6 provided in carrier company 5 that serves phone line for authenticator 3. Carrier Company 5 pays the expense of products or the like to retail store 7, or makes settlement the credit of user 2. Subsequently, the expense is withdrawn from an account of user 2 opened at financial institution 80 for a payment of call fees for carrier company 5. Authenticator 3 exchanges signals with server 6 through network 4.

To start operations of authentication system 1, firstly user 2 must go to carrier company 5 or its branch office 10 beforehand to proceed a registration as described later at resister 9 deployed there.

Next, respective devices included in authentication system 1 are described in detail.

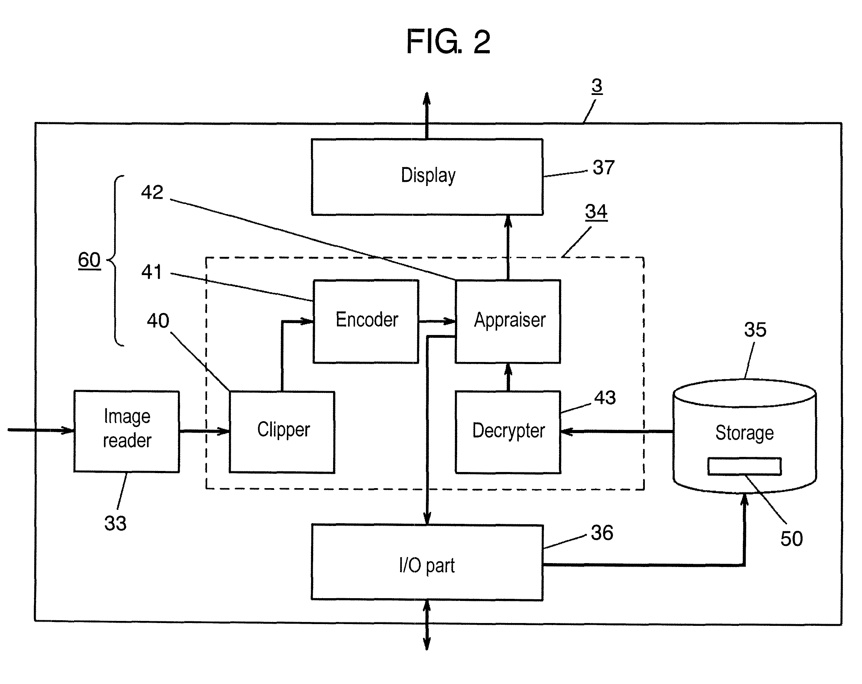

FIG. 2 is a block diagram showing an example configuration for authenticator 3 used in the preferred embodiment. As shown in FIG. 2, authenticator 3 comprises:
image reader 33 to input images containing eye (hereafter referred to eye-image) of user 2; input/output (I/O) part 36 to communicate data with server 6 via Network or the like; storage 35 to store data input into I/O part 36; processor 34 to perform a predetermined processing described later for an authentication using data input from image reader 33, data stored in storage 35 and data input from I/O part 36; and display 37 to show results processed in processor 34 or the like.

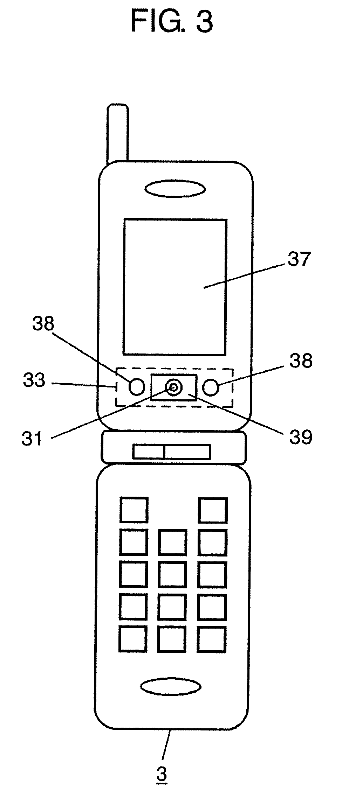

The external view of authenticator 3 is similar to the shape of cell-phone as an example shown in FIG. 3, and authenticator 3 may have functions provided in typical cell-phones such as telephone call, e-mailing or taking images although not shown here.

As shown in FIG. 3, image reader 33 of authenticator 3 takes an image using light radiated from light source 38 discharging near infrared light (a light lying in the wavelength interval from around 700 to 1000 nm) and reflected from an eye area of user 2 through optical system 31. User 2 can guide his/her eye into the field angle of optical system 31 by using reflection of his/her own eye-image from mirror 39. Image reader 33 of authenticator 3 should at least have optical system 31, and therefore mirror 39 can be eliminated when a display device such as LCD or an audio device such as speaker guide eye positioning of user 2. Image reader 33 does not necessarily require light source 38 when used under enough brightness such as outdoor use or when used with an external light source. However, light source 38 and mirror 39 should preferably be provided practically.

Display 37 can adopt any display device such as LCD widely used in cell-phones or the like or EL (Electro-luminescence) panel as appropriate.

Needless to say, authenticator 3 is not limited to a model having telephone function only although the example with the function is described in the preferred embodiment. It is also needless to say that any information device such as compact personal computer, personal digital assistant (PDA) and digital camera or the like can be used as authenticator 3 if only they are provided with image reader 33.

As described above, authenticator 3 can take a photo of eye-image at any time by image reader 33. Moreover, authenticator 3 can carry out an authentication processing by executing a predetermined software installed in processor 34 as described later.

Next, a configuration of authenticator 3 of authentication system 1 in a usable condition is described. Here, "authentication system 1 in a usable condition" means a condition when authenticator 3 has received clipper 40 as described later, encoder 41, appraiser 42 (hereafter clipper 40, encoder 41 and appraiser 42 are all together referred to authentication processor 60), decrypter 43 and login authentication data 50 from server 6 through I/O part 36.

As shown in FIG. 2, in a usable condition of authentication system 1 authenticator 3 comprises followings in processor 34:
clipper 40 to clip an image data input from image reader 33 out into an image with a predetermined size; encoder 41 to encode an image clip out from clipper 40 using a predetermined method; decrypter 43 to decrypt login authentication data 50 stored in storage 35; and appraiser 42 to appraise whether the authentication data encoded by encoder 41 agree with login authentication data 50 decrypted by decrypter 43.

All of clipper 40, encoder 41, appraiser 42 and decrypter 43 included in authenticator 3 are softwares respectively. The softwares are sent from server 6, then read into processor 34 from I/O part 36 or storage 35 of authenticator 3, and are executed respective software functions by processor 34.

Additionally, methods for instance disclosed in Japanese Patent Publication No. 3307936 can be used for authentication processing method of authentication processor 60 such as clipping method of images in clipper 40, encoding method of images in encoder 41, checking method between both authentication data in appraiser 42.

Additionally, login authentication data 50 shall mean an encoded iris pattern of user 2 to be checked for authentication.

Login authentication data 50 stored in storage 35 shall be encrypted in server 6 by a predetermined method, and decrypter 43 has a function to decrypt the encrypted login authentication data 50.

Encryption method of the authentication data can be for instance rearranging bits consisting of the authentication data in a fixed order. Needless to say, the present invention does not limit the encryption and corresponding decryption method to a specific one but accepts to use other well-known encryption and decryption methods as appropriate.

By reading the login authentication data 50 decrypted in aforesaid authentication processor 60 and decrypter 43 into processor 34 for execution, authenticator 3 can perform a principal authentication of user 2 by collating authentication data of the coded iris pattern of eye-image of user 2 with decrypted login authentication data 50.

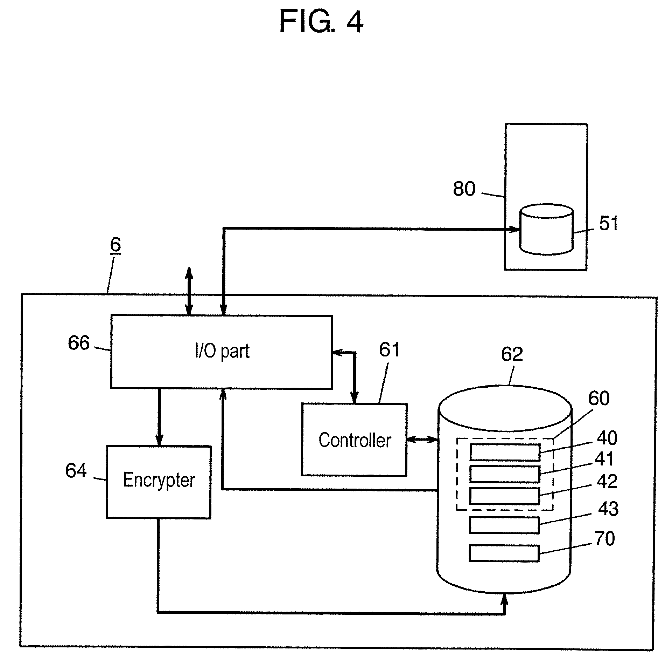

Next, the configuration of server 6 used in the preferred embodiment is described. FIG. 4 is a block diagram showing an example configuration of server 6. Server 6 is described as deployed in carrier company 5 to which user 2 subscribes. The present invention does not limit a location for server 6 to be deployed but needless to say, the server can be deployed in credit companies, financial institutions or the like.

In FIG. 4, server 6 comprises: input/output (I/O) part 66 to exchange signals with authenticator 3, register 9 and terminal 8; encrypter 64 to encrypt authentication data input from I/O part 66 by aforesaid method to produce login authentication data 50; login authentication data table 70 as described later to include login authentication data 50 of all users using authentication system 1; database 62 to store authentication processor 60 consisting of aforesaid clipper 40, encoder 41, appraiser 42 and decrypter 43; and controller 61 to control reading/writing data to database 62 according to data input from I/O part 66 or to appraise a credit of user 2. Additionally, controller 61 may have function other than mentioned above to send an accounting information to server 51 of financial institution 80.

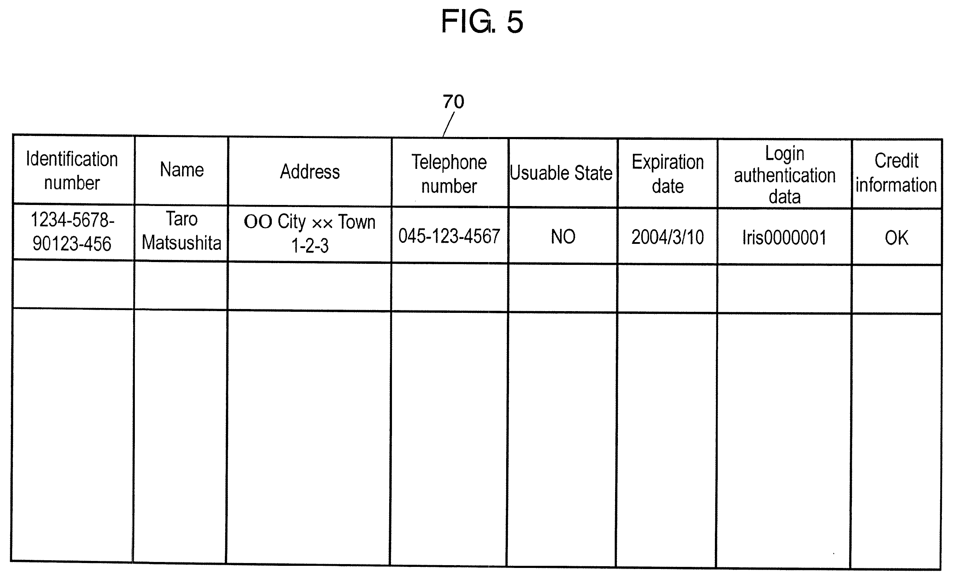

Login authentication data table 70 is described here. FIG. 5 shows an example of login authentication data table 70. Login authentication data table 70 includes following data for every user using authentication system 1: identification (ID) number; name; address; telephone number; with or without of authorization to use the authentication system; expiration date to use the authentication system; and login authentication data or credit information (possible or not to pay a predetermined amount of money) or the like. When a person, therefore, inputs information that he/she wants to purchase products from authenticator 3, server 6 can check his/her credit as well as identify the person.

The configuration of server 6 can store login authentication data 50 on all users who can use authentication system 1, and can send data of authentication processor 60 stored in database 62 to authenticator 3 through I/O part 66.

Database 62 of server 6 stores authentication data encrypted by the aforesaid method as login authentication data 50. Therefore, if someone copies or steals login authentication data 50 stored in database 62 to use it fraudulently, it cannot be used directly. Consequently risks of incorrect action such as impersonation or the like can be drastically reduced resulting in server 6 with a high security.

The encryption method described for aforesaid login authentication data 50 can also be applied for encrypter 64 in server 6.

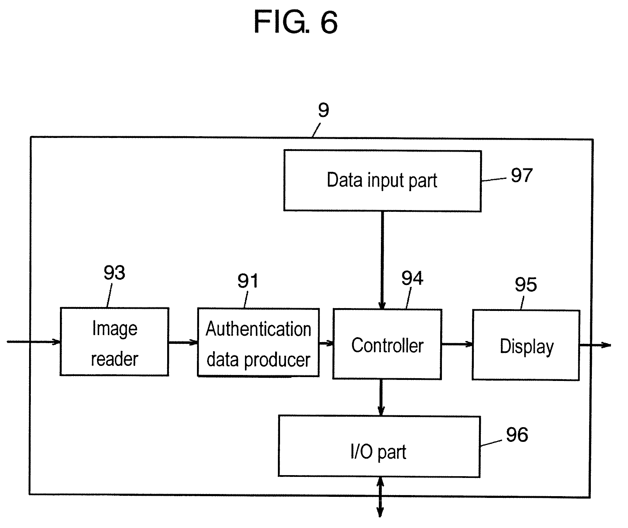

Next, the configuration of register 9 is described. FIG. 6 is a block diagram showing an example of register configuration. As mentioned above, register 9 is described with the thought of deployed in branch office 10 of carrier company 5. The present invention does not limit a location for register 9 to deploy but the register can be deployed in any location where tampering actions such as breakage or data stealing are difficult to occur.

Register 9 has: input/output (I/O) part 96 to exchange data with server 6; image reader 93 having functions similar to image reader 33 of aforesaid authenticator 3; authentication data producer 91 having functions similar to clipper 40 and encoder 41 in authentication processor 60 of aforesaid authenticator 3; data input part 97 to input operational information to start authentication system 1, individual information such as ID of user 2, name, facial photo, signature or the like; and controller 94 to send authentication data output from authentication data producer 91 according to input data from data input part 97 or individual data or the like. Additionally, register 9 may comprise display 95 showing an application window as described later to prompt for user 2 to input his/her individual data.

An example in which authentication data is sent from register 9 to server 6 directly is described in this embodyment. The configuration can decrease a data size of communication between carrier company 5 and branch office 10. The data size of aforesaid authentication data, for instance, can be reduced to only 512 bytes. The configuration is adopted as an exclusive line or communications line with high security is generally provided between carrier company 5 and branch office 10. However, in case of common communications line like the Internet is used, it is needless to say that data exchange between server 6 and register 9 should preferably be carried out using cryptography agreed between the two beforehand. Facial image taken by user 2 himself/herself in a credible branch office 10 added to his/her signature and authentication data can be sent to server 6 for registration as facial photo or signature is included in the individual data input by data input part 97 of register 9. This can reduce the occurrence of problems drastically due to incorrect actions such as impersonation or the like resulting in the authentication system with a high reliability.

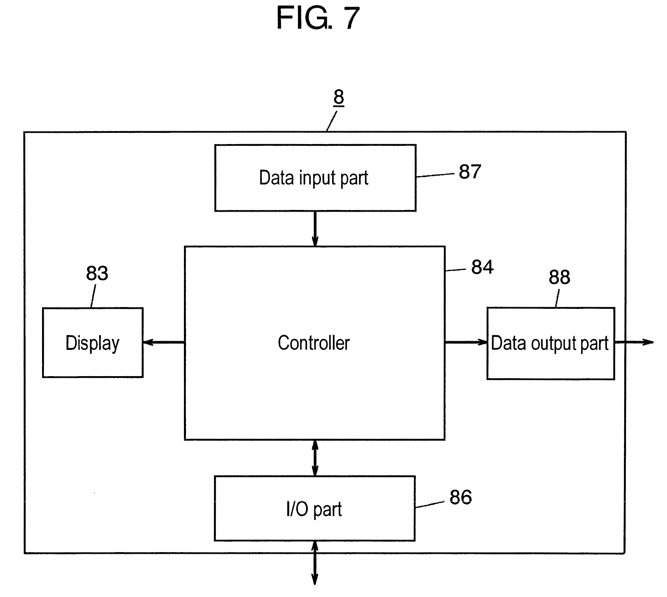

Next, the configuration of terminal 8 is described with respect to FIG. 7. As mentioned before, terminal 8 is described as deployed in retail store 7 selling products which user 2 wants to purchase.

Terminal 8 has: input/output (I/O) part 86 to exchange data with server 6; data input part 87 to input data on price, code number or the like of products which user 2 wants to purchase; display 83 to show predetermined information; controller 84 to output data input in data input part 87 from I/O part 86, or to show data input from I/O part 86 on display 83; and data output part 88 to output data of possible or not to purchase products to authenticator 3.

Data output part 88 can for instance send data to authenticator 3 through a phone line, but taking into consideration the cost required, should preferably have a configuration capable of sending data directly such as infrared data communication system according to Infrared Data Association (IrDA) standard or the like installed on comparatively many of modern information equipment such as cell-phone, PDA, PC or the like.

Additionally, terminal 8 may have a storage, not shown, to store identification data such as ID number or the like previously allocated to retail store 7 deployed with terminal 8 in authentication system 1.

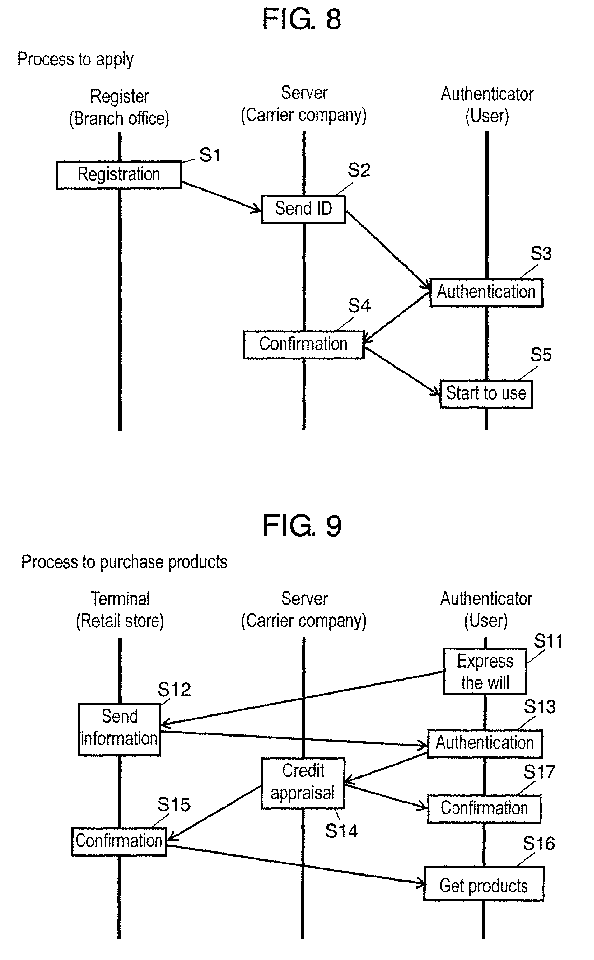

Next, an example operation of authentication system 1 of the present invention is described in detail with reference to FIG. 8 or FIG.9.

As aforementioned, to start operation of authentication system 1, user 2 must go to branch office 10 of carrier company 5 beforehand to proceed a registration at resister 9 deployed there. FIG. 8 is a schematic diagram to explain the process to apply a use of authentication system 1.

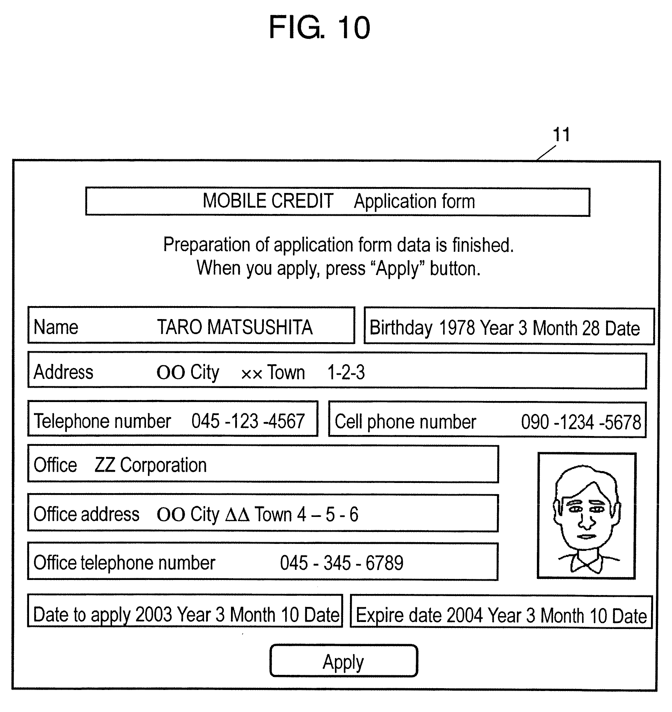

As shown in FIG. 8, user 2 goes to branch office 10, deployed with register 9, of carrier company 5 beforehand to proceed the predetermined registration. Specifically, user 2 inputs his/her own individual data such as name, address, facial photo or signature or the like from data input part 97 of register 9, and takes his/her eye-image by image reader 93. At this time, application window 11 should preferably be shown in display 95 of register 9 for user 2 to input his/her individual data easier as shown in FIG. 10. Authentication data producer 91 of register 9 produces aforementioned authentication data corresponding to user 2 using eye-image input from image reader 93. Moreover, controller 94 sends individual data and authentication data to server 6 of carrier company 5 through I/O part 96 (S1).

Next, controller 61 of server 6 in carrier company 5 provides user 2 with his/her ID number according to data input from I/O part 66, and encrypts input authentication data in encrypter 64, thereby creating login authentication data 50. Login authentication data 50 are stored in login authentication data table 70 of database 62 being coordinated with ID number and individual data. Then login authentication data 50, authentication processor 60 and decrypter 43 (hereafter referred to ID publication data all together) are sent to authenticator 3 corresponding to user 2 (S2). The sending method may be either attaching the ID publication data on a general E-mail, or sending the ID publication data directly to authenticator 3. Upon receiving the ID publication data, authenticator 3 becomes a usable configuration in authentication system 1 as shown in FIG. 2.

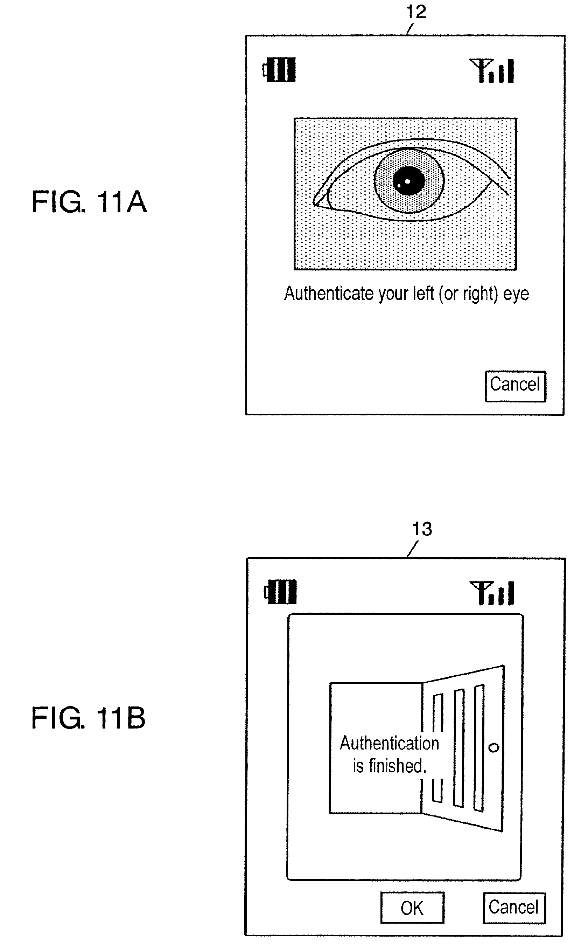

Next, to start a use of authentication system 1 practically, user 2 takes his/her eye-image to authenticate in authenticator 3 after authenticator 3 has received the ID publication data from server 6 (S3). At this time, display 37 of authenticator 3 may show authentication start window 12 as shown in FIG. 11A. Eye-image of user 2 input from image reader 33 of authenticator 3 is clipped to a predetermined size in clipper 40, subsequently encoded in encoder 41, then sent to appraiser 42. Appraiser 42 checks authentication data decrypted from login authentication data 50, stored in storage 35, in decrypter 43 to compare with the authentication data output from encoder 41, and sends the results to I/O part 36.

When authenticator 3 authenticates user 2 successfully, namely when appraiser 42 outputs successful signals in principal authentication, authenticator 3 sends the results to server 6 from I/O part 36 of authenticator 3. At this time, display 37 of authenticator 3 may have window 13 to show an authentication finish as shown in FIG. 11B.

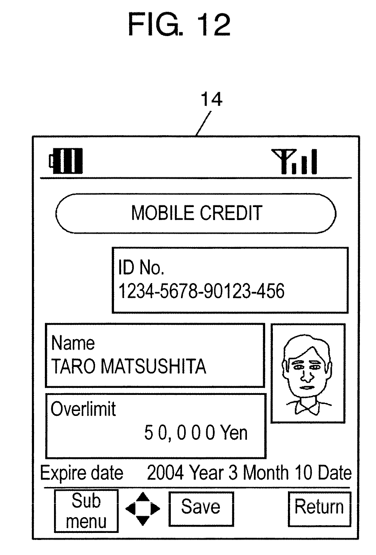

Controller 61 in server 6 receives data sent from authenticator 3 through I/O part 66. When the data signals a finish of authentication processing indicating a principal authentication correctly, controller 61 writes information that authentication system is in a usable state on a region corresponding to user 2 in login authentication data table 70 of database 62 (S4). Server 6 informs authenticator 3 that authentication system 1 is in a usable state, and display 37 shows said effects. At this time, display 37 of authenticator 3 should preferably have permission window 14 to show permission for authentication system 1 as shown in FIG. 12 enabling user 2 to know the permission clearly. Permission window 14 shown in FIG. 12 is an example indicating data of user 2 such as ID number, name, overlimit, expiration date, facial photo or the like. Aforementioned flows of operation enable user 2 to use authentication system 1 (S5).

Next, the operation of authentication system 1 for user 2 to purchase products at a retail store 7 is described. FIG.9 shows the operation of authentication system 1 for user 2 to purchase products schematically.

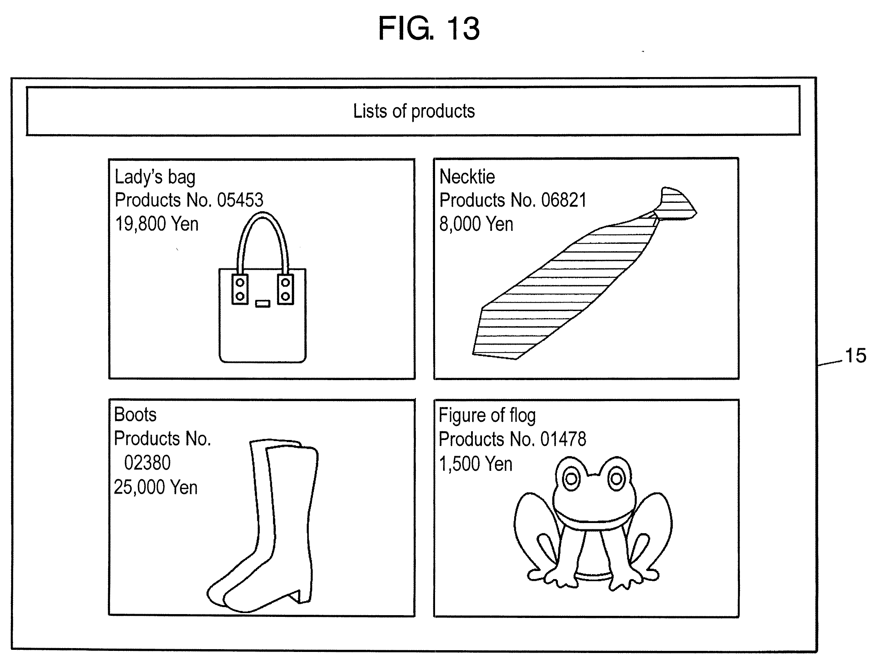

In FIG. 9, user 2 expresses his/her will to purchase a predetermined products to a salesperson or the like at a retail store 7 (S11). Needless to say, user 2 can send information of will to purchase predetermined products to retail store 7 through the network or the like. In this case, user 2 needs not go to retail store 7 any more but can purchase products in virtual shops in the network. Additionally, products list window 15 available in this case as shown in FIG. 13 can help best choice of products for user 2.

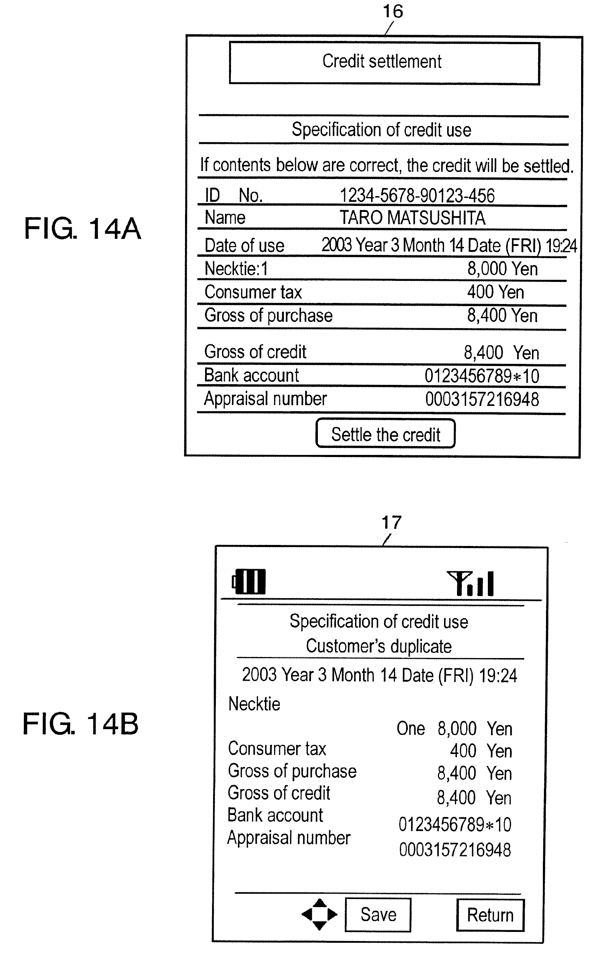

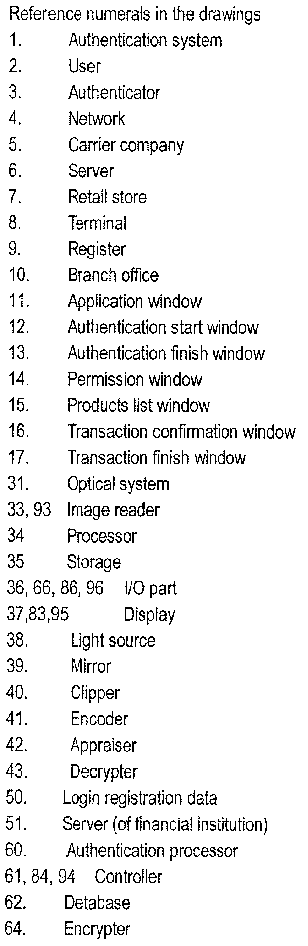

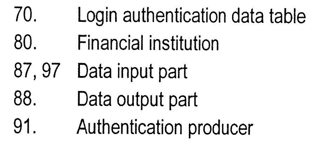

Through a manual operation by salesperson or an automatic operation, terminal 8 in retail store 7 sends data corresponding to the products such as price, ID number of retail store 7 or the like to authenticator 3 of user 2 from data input part 87 (S12). The sending method may be either attaching the data on a general E-mail, or sending the data directly to authenticator 3. Additionally, data may be sent to authenticator 3 directly from terminal 8 by using infrared data communication system, or be sent through server 6 of carrier company 5 or the like. Moreover, user 2 may read in correspondent barcode data of products disposed on storefronts or printed in catalogs that he/she wants to purchase from image reader 33 of authenticator 3. In this case, the barcode data shall supposedly include the ID number of retail store 7 or prices of the products or the like that he/she wants to purchase. In response to the data sent from terminal 8 in step S12, a massage to confirm his/her wish to purchase the products is shown in display 37 of authenticator 3. Transaction confirmation window 16 shown in FIG. 14 A may be an example. Transaction confirmation window 16 has only to show data such as names and prices of the products that he/she wants to purchase. User 2 takes his/her eye-image using authenticator 3 for the principal authentication (S13). The principal authentication is processed as described before. Upon authenticating, display 37 of authenticator 3 may have a configuration to show authentication start window 12 or authentication finish window 13.

When appraiser 42 outputs successful signals in principal authentication of user 2, authenticator 3 sends the data correspondent to successfully authenticated user 2 such as individual ID number, store's ID number, prices of bought products or the like (hereafter referred to products purchase data) to server 6 of carrier company 5 from I/O part 36 of authenticator 3. The sending method can be adopted among known methods as appropriate such as attaching the products purchase data on a general E-mail, sending the products purchase data directly, or the like. Controller 61 of server 6 performs a credit appraisal whether user 2 has enough credit to purchase the products according to the products purchase data received from authenticator 3 (S14). The credit appraisal can take into consideration the payment history of call charges in the past of user 2 stored in login authentication data table 70 (hereafter referred to credit data), or can determine whether the amount goes or not beyond an predetermined overlimit amount. Controller 61 of server 6 sends the results of credit appraisal to terminal 8.

Terminal 8 confirms the results of credit appraisal received (S15). If credit of user 2 is checked successfully, user 2 can get products from salesperson of retail store 7 or by transportation (S16). If, in step S15, credit of user 2 is checked to be not enough to purchase the products, user 2 is notified the results by the information shown in display 83 of terminal 8, or information sent from the salesperson or the like, causing user 2 to fail in the transaction.

Additionally, the results of credit appraisal checked at server 6 in step 14 are as aforementioned sent to terminal 8 of retail store 7 and to authenticator 3 of user 2 as well. Display 37 shows a transaction finish window 17 as shown in FIG. 14B, notifying that products expense is deducted from his/her account in the financial institution immediately or on a contracted settlement date (S17). Server 6 sends a demand for deduction to server 51 of financial institution 80. This allows user 2 to know that values of products he/she wants to purchase are deducted from his/her account in financial institution 80. Needless to say such configuration can be available that the values are charged to user 2 later, adding with call charges of carrier company 5.

As mentioned above, the authenticator, server and authentication system of the present invention can reduce risks of fraudulent acts such as spoofing or forgery of authentication data because user 2 takes his/her eye-images and produces his/her authentication data at register 9 of branch office 10 of carrier company 5 to start authentication system 1. Generally speaking, branch offices of carrier companies have a high security.

Additionally, the authenticator, server and authentication system of the present invention can reduce occurrences of fraudulent acts against the authentication system from authenticator 3 drastically because authentication processor 60 is sent to authenticator 3 only after authentication system 1 is determined to start.

Moreover, the authenticator, server and authentication system of the present invention can provide the configuration with a high security, because authentication data are communicated between authenticator 3 and server 6 using login authentication data 50 that is an encrypted form of authentication data, thereby disabling the data to use as authentication data if the data are stolen or copied during the communication.

Moreover, the authenticator, server and authentication system of the present invention can provide the configuration with a high security, because server 6 sends decrypter 43 to decrypt login authentication data 50 to authenticator 3 only after authentication system 1 has started, or only for highly credible user authenticated previously.

Additionally, the authenticator, server and authentication system of the present invention can provide the configuration with a high security, because authenticator 3 sends products purchasing data or demand for payment to server 6, thereby disabling fictitious user 2 in retail store 7 to forge products purchasing data.

Additionally, although iris data formed from encoded eye-images are described as authentication data in the preferred embodiment, the authenticator, server and authentication system of the present invention do not limit the authentication data to the iris data only. Known biometrics data such as fingerprint, eyeground vascular pattern, face or the like can be used as authentication data.

### INDUSTRIAL APPLICABILITY

The authentication system with authenticator, server, register and terminal has a configuration with a high security as no one can do fraudulent acts on the system easily even if using forgery of the authenticator or retail store's system. The authenticator and authentication system can be used for the principal authentication using images.

## Claims

1. An authentication system comprising:
an authenticator including:
an authentication processor to authenticate whether or not an authenticatee is a user previously registered; and
a data output part to output an identification data when the authenticatee is authenticated as the user previously registered; and
a server including:
a credit appraiser to appraise credit of the authenticatee according to the identification data output from the data output part; and
an appraisal result output part to output a result in the credit appraiser.

2. The authentication system of claim 1, wherein the authenticator includes an image reader to input an image data, and the authentication processor authenticates the authenticatee according to the image data input from the image reader.

3. The authentication system of claim 2, wherein
an eye-image of the authenticatee is used as the input image data and the authentication processor includes:
an authentication data producer to produce an authentication data according to an iris pattern of the eye image of the authenticatee;
a storage to store a login authentication data; and
a collator to collate the login authentication data with the authentication data produced according to the eye image.

4. The authentication system of claim 1, further comprising a terminal comprising a terminal including an appraisal result input part to input the appraisal result output from the server.

5. The authentication system of claim 4, wherein the authenticator has a data input part to input a data including a data on a product to be transacted, and the terminal has a data output part to output a data including a data on the product to be transacted to the data input part of the authenticator.

6. An authentication system comprising:
a server including:
a storage to store a login authentication data of a user to be registered and an authentication processor to execute a predetermined authentication process; and
a data output part to output the login authentication data and the authentication processor; and
an authenticator including:
an authentication data input part to input an authentication data of an authenticatee;
an data input part to input the login authentication data and the authentication processor; and
a processor to perform a predetermined processing using the authentication data,
wherein the authenticator reads the authentication processor input from the server into the processor to collate the authentication data of the authenticatee with the login authentication data of the authenticatee using the authentication processor read into the processor.

7. The authentication system of claim 6, further comprising a register having a login authentication data input part to input a login authentication data of the user to be registered and a login authentication data output part to output the login authentication data, wherein
the server includes a data input part to input the login authentication data and the authentication processor,
the register outputs the login authentication data input into the login authentication input part from the data output part to the data input part of the server, and
the server stores the login authentication data input into the data input part in the storage.

8. The authentication system of one of claim 6 and 7, wherein
the server includes an encrypter to encrypt the authentication processor and the login authentication data by a predetermined encrypting method; stores a decrypter to decrypt encrypted the authentication processor and the login authentication data in the storage; and outputs the decrypter and encrypted the authentication processor and the login authentication data; and
the authenticator decrypts the authentication processor and the login authentication data input into the data input part by the decrypter.

9. An authentication system comprising:
a register including a login authentication data input part to input a login authentication data of an authenticatee and a login authentication data output part to output the login authentication data;
an authenticator including an authentication data input part, data I/O part to input/output a certain data, and a processor to perform a predetermined processing using the authentication data;
a server including a data input part to input an identification data of the authenticatee from the authenticator and to input the login authentication data from the register, a storage to store the login authentication data and an authentication processor to perform a predetermined authentication processing, a credit appraiser to appraise a credit of the authenticatee using the identification data; and
a terminal including an appraisal result input part to input the appraisal result output from the server, wherein
the authenticator reads the authentication processor input from the server into the processor to collate the authentication data of the authenticatee with the login authentication data by the authentication processor, then outputs the identification data of the authenticatee to the server when the authenticatee is authenticated as a user registered previously;
the server appraises credit of the authenticatee in the credit appraiser to output a result of the appraisal to the terminal.

10. An authenticator comprising:
an image reader to input an image;
an authentication data producer to produce an authentication data out of the image;
a collator to collate the authentication data with another authentication data;
a data input part to input a data including a login authentication data; and
a processor to perform a predetermined processing using the data input from the data input part and the image, wherein
the processor reads the authentication data producer and the collator from the data input part for the authentication data producer to produce the authentication data correspondent to the image, and
the collator checks to compare the login authentication data with the authentication data correspondent to the image.

11. The authenticator of claim 10, wherein
the login authentication data is encrypted;
the data input part inputs a decrypter to decrypt the login authentication data; and
the collator checks to compare the login authentication data decrypted by the decrypter with the authentication data correspondent to the image.

12. The authenticator of one of claim 10 and 11, wherein
the image is an eye-image of the authenticatee, and
the authentication data producer produces the authentication data according to an iris pattern of the eye-image of the authenticatee.

13. A server comprising:
a data input part to input data including an authentication data;
an encrypter to encrypt the authentication data for a login authentication data;
a storage to store the login authentication data; and
a data output part to output data stored in the storage.

14. The server of claim 13, wherein the storage stores:
an authentication data producer to produce an authentication data using an image,
a collator to collate the authentication data with another authentication data, and
a decrypter to decrypt the login authentication data.

15. A register comprising:
an image reader to input an image of a user to be registered;
an authentication data producer to produce a certain authentication data using the image;
an individual data input part to input an individual data of the user to be registered; and
a data output part to output the authentication data and the individual data.

16. The register of claim 15, wherein
the image is an eye-image of the user to be registered, and
the authentication data producer produces the authentication data according to an iris pattern of the eye-image of the user to be registered.

17. A terminal comprising:
an appraisal result input part to input a credit appraisal of a user to purchase a product; and
a data output part to output a data including a data showing whether or not the product is accepted to be purchased based on a result of the credit appraisal.

18. The terminal of claim 17, wherein the data output part outputs the data including the data showing whether or not the product is accepted to be purchased using an infrared ray.
